# EUROPÄISCHE PATENTSCHRIFT

(11) **EP 2 361 391 B1**
(45) Veröffentlichungstag und Bekanntmachung des Hinweises auf die Patenterteilung: **27.06.2012**
(21) Anmeldenummer: 09771532.0
(22) Anmeldetag: 27.11.2009
(51) Int. Cl.: G01S 7/481, G01S 13/42, G01S 13/89, G01S 17/42, G01S 17/89, G02B 26/08, G02B 26/12, G01S 13/88

(54) **VORRICHTUNG UND VERFAHREN ZUM ABBILDEN EINES OBJEKTS MIT ELEKTROMAGNETISCHER HOCHFREQUENZSTRAHLUNG**
METHOD AND DEVICE FOR IMAGING AN OBJECT USING ELECTROMAGNETIC HIGH-FREQUENCY RADIATION
DISPOSITIF ET PROCÉDÉ D'IMAGERIE D'UN OBJET PAR RAYONNEMENT ÉLECTROMAGNÉTIQUE HAUTE FRÉQUENCE

(30) Priorität: 02.12.2008 DE 102008059932
(43) Veröffentlichungstag der Anmeldung: 31.08.2011
(73) Patentinhaber: SynView GmbH, 61348 Bad Homburg (DE)
(72) Erfinder: LÖFFLER, Torsten, 61479 Glashütten (DE)
(74) Vertreter: Siebert, Karsten
(86) Internationale Anmeldenummer: PCT/EP2009/065994
(87) Internationale Veröffentlichungsnummer: WO 2010/063654

(56) Entgegenhaltungen:
- WO-A2-2005/017559
- GB-A- 2 034 554
- US-A- 5 859 609
- US-A1- 2001 013 839
- US-A1- 2007 046 525
- VASKELAINEN L I ET AL: "Array-fed parabolic-cylindrical reflector antenna for multifunction surveillance radar" RADAR '97. EDINBURGH, OCT. 14 - 16, 1997; [IEE CONFERENCE PUBLICATION], LONDON : IEE, GB, Bd. NO. 449, 14. Oktober 1997 (1997-10-14) , Seiten 379-382, XP006508972 ISBN: 978-0-85296-698-3

## Beschreibung

Die vorliegende Erfindung betrifft eine Vorrichtung zum Abbilden eines Objekts mit Hilfe elektromagnetischer Hochfrequenzstrahlung, mit mindestens einem Detektor für elektromagnetische Hochfrequenzstrahlung und mit mindestens einer abbildenden Einrichtung, die einen Fokus erzeugt,

Die Erfindung betrifft darüber hinaus ein Verfahren zum Abbilden eines Objekts mit Hilfe elektromagnetischer Hochfrequenzstrahlung mit den Schritten: Abbilden des Objekts auf mindestens einen Detektor mit einer abbildenden Einrichtung, die einen Fokus erzeugt und Erfassen der Abbildung mit dem Detektor.

Der Terahertz-Frequenzbereich (THz) ist einer der letzten der "dunklen" Frequenzbereiche des elektromagnetischen Spektrums, d.h. Strahlungsquellen und Empfänger sind für diesen Frequenzbereich bisher nur schwer erhältlich. Daher beschränken sich die Anwendungen elektromagnetischer Strahlung in diesem Frequenzbereich bisher auf forschungsnahe Gebiete, wie zum Beispiel die Radioastronomie oder die Materialwissenschaften. Dabei bietet der THz-Frequenzbereich gegenüber anderen Frequenzbereichen des elektromagnetischen Spektrums erhebliche Vorteile:
- Viele optisch undurchsichtige Materialien sind im THz-Frequenzbereich transparent.
- THz-Strahlung ist nicht-ionisierend und wird daher im biomedizinischen Bereich als sicher betrachtet.
- Bestimmte rotatorische, translatorische oder vibronische Molekülanregungen weisen eine Resonanzfrequenz im THz-Frequenzbereich auf.
- THz-Strahlung liefert wesentliche Informationen über Ladungsträgerdynamiken, insbesondere in Nanostrukturen, die eine essentielle Rolle in zukünftigen photonischen und elektronischen Komponenten spielen.
- THz-Strahlung zeigt eine geringe Streuung, verglichen mit optischen Frequenzen und ist daher insbesondere zur Verwendung in industriellen Umgebungen, in denen es beispielsweise vermehrt zur Staubbildung kommt, geeignet.
- Betrachtet man Kommunikationssysteme, so ermöglichen höhere Frequenzen größere Übertragungsbandbreiten.

Seit einiger Zeit wird versucht, den THz-Frequenzbereich für bildgebende Anwendungen, insbesondere in der Sicherheitstechnik zur Kontrolle und Überprüfung von Personen, zugänglich zu machen.

Aus der US-5,859,609 ist eine Vorrichtung zur holographischen genäherten Echtzeitabbildung von verborgenen Gegenständen mit Hilfe von THz-Strahlung bekannt. Eine vertikale lineare Antennenanordnung wird über einen kreisförmigen Pfad bewegt, um ein zylindrisches Abtasten von 360° eines bedeckten Ziels, wie zum Beispiel einer bekleideten Person, zu erreichen. Die Daten liegen in Form einer nicht fokussierten Millimeterwellenbeleuchtung vor, die in der Lage ist, eine Bedeckung, wie zum Beispiel einer bekleideten Person, zu erreichen und die in der Lage ist, eine Bedeckung, wie zum Beispiel Kleidung, zu durchdringen. Die Millimeterwellenbeleuchtung muß mathematisch, d.h. rechnerisch, in erkennbare Bilder fokussiert oder rekonstruiert werden.

Eine solche Vorrichtung weist den Nachteil auf, daß sie zur Erzeugung einer Abbildung eines dreidimensionalen Gegenstands mit Hilfe einer synthetischen Apertur in zwei Dimensionen zum einen eine große Anzahl von Quellen und Detektoren in einer ersten Richtung benötigt und darüber hinaus die Anordnung aus Quellen und Detektoren vollständig um das Objekt herum bewegt werden muß, um auch in einer zweiten zu der Zeile aus Quellen und Detektoren senkrechten Richtung ein Bild mit synthetischer Apertur generieren zu können. Dies ist zum einen mit hohen Kosten aufgrund der großen Anzahl von erforderlichen Quellen und Detektoren verbunden, zum anderen jedoch mit einer vergleichsweise langen Meßzeit, da die gesamte Anordnung, beispielsweise zur Aufnahme einer vollständigen Person, einmal 360° im Kreis gedreht werden muß.

Die amerikanische Offenlegungsschrift US 2007/0046525 A1 offenbart einen Abtastmechanismus, der mit einem optischen System zur Steuerung dieses Systems verbunden ist, so daß fokussierte Strahlung über eine Objektebene bewegt wird.

Gegenüber diesem Stand der Technik liegt der vorliegenden Erfindung unter anderem die Aufgabe zugrunde, eine Vorrichtung und ein Verfahren zum Abbilden eines Objekts mit Hilfe elektromagnetischer Hochfrequenzstrahlung bereitzustellen, welche zumindest einen der zuvor genannten Nachteile vermeiden.

Diese Aufgabe wird erfindungsgemäß durch eine Vorrichtung nach Anspruch 1 gelöst.

Dabei kann die abbildende Einrichtung im Sinne der vorliegenden Anmeldung in einer Ausführungsform ein abbildendes System mit einer vollsynthetischen Apertur sein, welches ohne optisch fokussierende Elemente auskommt und den Fokus lediglich mathematisch, d.h. rechnerisch erzeugt. In einer bevorzugten Ausführungsform ist die abbildenden Einrichtung eine abbildende Optik, d.h. ein refraktives oder reflektierendes Element, das zumindest in einer Dimension eine optische Abbildung erzeugt. Durch die Fokussierung der verwendeten elektromagnetischen Strahlung mit einer Optik in zumindest einer Dimension kann die Anzahl der zu verwendenden Detektoren zumindest in einer Dimension gegenüber einem vollsynthetischen System erheblich reduziert werden, weil eine abschnittsweise Erfassung des Objekts durch Bewegen des Fokus der abbildenden Optik über das Objekt erfolgt.

Als Hochfrequenz- oder THz-Strahlung im Sinne der vorliegenden Erfindung wird elektromagnetische Strahlung in einem Frequenzbereich von 800 MHz bis 10 THz, d.h. in einem erweiterten THz-Frequenzbereich, bezeichnet. Vorzugsweise liegen die für die Abbildung verwendeten Frequenzen in einem Bereich von 30 GHz bis 1 THz und besonders bevorzugt bei etwa 100 GHz. Bei diesen Frequenzen treten große Unterschiede in Reflexions- bzw. Transmissionsverhalten verschiedener Materialien auf, welche beispielsweise bei der Personenüberwachung eine Rolle spielen. Metall, zum Beispiel die Oberfläche einer Schuß- oder Stichwaffe, hat in diesem Frequenzbereich eine hohe Reflektivität, während biologisches Material, zum Beispiel die Hautoberfläche des Waffenträgers, ausgeprägte Absorptionsfenster in diesem Frequenzbereich aufweist.

Obwohl die erfindungsgemäße Vorrichtung als passives System, d.h. ohne Quelle für die elektromagnetische Strahlung, ausgestaltet sein kann, weist sie in einer Ausführungsform mindestens eine Quelle für elektromagnetische Strahlung auf, wobei die Quelle vorzugsweise eine Quelle für elektromagnetische Hochfrequenzstrahlung in einem Frequenzbereich von 800 MHz bis 10 THz und besonders bevorzugt in einem Frequenzbereich von 30 GHz bis 1 THz ist.

Herkömmliche abbildende Einrichtungen zur Erzeugung des Bildes eines Objekts benötigen aufgrund des spekularen Charakters der abzubildenden Objekte eine große numerische Apertur zur Erzeugung eines Bilds mit hoher Auflösung. Diese Forderung kann von für eine Abtastung des Objekts schnell bewegten kleinen Optiken jedoch nur unter Inkaufnahme großer Bildfehler erfüllt werden. Um dieses Problem zu umgehen, ist in einer Ausführungsform der Erfindung die abbildende Einrichtung, insbesondere jedoch die abbildende Optik so eingerichtet, daß sie eine Mehrzahl von voneinander räumlich getrennten Strahlengängen bildet, deren Foki an einer Mehrzahl voneinander verschiedenen Orten liegen und darüber hinaus das steuerbare, die Strahlrichtung ändernde Element so eingerichtet ist, daß die Foki der voneinander getrennten Strahlengänge räumlich bewegbar sind.

Auf diese Weise kann das Objekt an mehreren, voneinander getrennten Stellen über einen Bereich hinweg abgetastet werden, wobei die einzelnen voneinander getrennten Bereiche mit Optiken kleinerer Apertur abgetastet werden können und das Bild später aus der Mehrzahl der abgetasteten Bereiche zusammengesetzt wird. Bereiche zwischen den von den Foki erfaßten abgetasteten Bereichen des Objekts werden dabei vorzugsweise interpoliert.

Insbesondere ist es dabei vorteilhaft, wenn die räumlich getrennten Strahlengänge in einer Ausführungsform so ausgerichtet sind, daß sie das Objekt aus unterschiedlichen Blickrichtungen "betrachten". Anders ausgedrückt schließen die räumlich getrennten Strahlengänge bei ihrem Auftreffen auf ein Objekt miteinander Winkel von größer 0° (auch 180 °, also einander entgegengesetzt) ein. D.h. sie sind nicht parallel zueinander.

In einer einfach zu realisierenden Ausführungsform der Erfindung weist die Vorrichtung genau eine Quelle und einen Detektor auf. Dabei wird als Quelle auch eine zusammenhängende Anordnung mehrerer emittierender Elemente für die elektromagnetische Strahlung verstanden. Detektor im Sinne der vorliegenden Anmeldung kann auch eine zusammenhängende Anordnung mehrerer Empfänger für die elektromagnetische Strahlung sein.

Eine Anordnung der erfindungsgemäßen Vorrichtung mit genau einer Quelle und einem Detektor, welche eine Mehrzahl von voneinander räumlich getrennten Strahlengängen aufweist, deren Foki an einer Mehrzahl voneinander verschiedener Orte liegen, weist zweckmäßigerweise in einer Ausführungsform jeweils mindestens ein fokussierendes Element in jedem der voneinander räumlich getrennten Strahlengänge auf.

In einer alternativen Ausführungsform einer solchen Anordnung weist jeder der räumlich getrennten Strahlengänge jeweils eine Quelle und einen Detektor auf, so daß die Anordnung eine identische Anzahl von Quellen und Detektoren aufweist.

Alternativ zu einer Ausführungsform mit jeweils einem fokussierenden Element pro Strahlengang kann auch zunächst eine Fokussierung der von einer Quelle erzeugten Hochfrequenzstrahlung erfolgen, die dann nachfolgend auf die mehreren räumlich voneinander getrennten Strahlengänge, beispielsweise durch einen Strahlteiler, aufgeteilt wird.

Gemäß der Erfindung ist das steuerbare, die Strahlrichtung ändernde Element eine für die zu erfassende elektromagnetische Hochfrequenzstrahlung spiegelnde Fläche eines Flügels einer Drehtür. Eine solche Anordnung weist den Vorteil auf, daß sie es ermöglicht, Personen, die beispielsweise ein Gebäude oder einen Gebäudeabschnitt durch eine Drehtür betreten, zu erfassen und zu überprüfen, ohne daß diese davon notwendigerweise Kenntnis erlangen. Dabei kann für das die Strahlrichtung ändernde Element mit dem Flügel der Drehtür auf ein Element zurückgegriffen werden, welches ohnehin vorhanden ist und mechanisch angetrieben wird. Bei einer Ausführungsform ist die spiegelnde Fläche des Flügels der Drehtür metallisch beschichtet, um eine ausreichende Reflektivität für die verwendete Hochfrequenzstrahlung bereitzustellen.

In einer Ausführungsform der Erfindung ist als weiteres die Strahlrichtung änderndes Element ein bewegbares optisches Element mit polygonaler, vorzugsweise dreieckiger Grundfläche vorgesehen, dessen zumindest einen Seitenfläche einen Spiegel für die verwendete Hochfrequenzstrahlung bildet und der um eine Achse drehbar ist. Eine solche Anordnung ermöglicht ein schnelles Abtasten eines zu erfassenden Oberflächenbereichs des Objekts, da die Ablenkung durch eine Drehbewegung erzielt wird.

In einer Ausführungsform der Erfindung weisen die voneinander räumlich getrennten Strahlengänge alle eine voneinander verschiede optische Weglängen zwischen dem Objekt und dem Detektor bzw. zwischen der Quelle, dem Objekt und dem Detektor auf, so daß bei Verwendung genau einer Quelle und eines Detektors für alle Strahlengänge die Rückreflexe von den einzelnen Foki der Strahlengänge zeitlich kodiert sind.

Alternativ oder zusätzlich können in Ausführungsformen, bei denen jeder der Strahlengänge mindestens jeweils ein bewegbares optisches Element aufweist, die optischen Elemente so eingerichtet sein, daß zu einem gegebene Zeitpunkt nur eines der bewegbaren optischen Elemente elektromagnetische Strahlung zu dem Detektor durchläßt. Ein Beispiel hierfür ist eine Anordnung mit drei räumlich voneinander getrennten Strahlengängen, bei der in jedem der drei Strahlengänge jeweils ein sich drehende Spiegelkörper mit dreieckigem Querschnitt vorgesehen ist, wobei jeweils nur eine der drei Seitenflächen eines jeden Spiegelkörpers spiegelnde Eigenschaften aufweist, während die beiden anderen Seiten des Spiegelkörpers jeweils absorbierend sind.

Sind in einer Ausführungsform mit mehreren voneinander räumlich getrennten Strahlengängen in jedem der getrennten Strahlengänge mindestens ein bewegbares optisches Element, vorzugsweise ein solcher zuvor beschriebener Spiegelkörper, vorgesehen und zusätzlich ein weiteres bewegbares strahlablenkendes Element welches mit einer geringen Geschwindigkeit bewegt wird, beispielsweise die spiegelnde Oberfläche eines Flügels einer Drehtür, so können mit der schnellen Bewegung der Spiegelkörper gleich mehrere kleine Oberflächenabschnitte des Objekts schnell abgetastet werden, während die langsame Bewegung des zweiten strahlablenkenden Elements, d.h. die der Drehtür, dafür sorgt, daß nacheinander unterschiedliche Bereiche des Objekts abgetastet werden.

In einer bevorzugten Ausführungsform der Erfindung weist der Detektor mindestens zwei Empfänger oder Bildpunkte auf, die so angeordnet sind, daß sie eine Zeile bilden, wobei die Vorrichtung eine Steuerung bzw. Auswerteeinrichtung aufweist, welche so eingerichtet ist, daß die Empfänger so betreibbar sind, daß sie in einer Richtung parallel zu der Zeile eine Abbildung mit synthetischer Apertur erzeugen und wobei die abbildende Einrichtung eine abbildende Optik ist, die so eingerichtet ist, daß sie nur in zu den Zeilen im wesentlichen senkrechten Ebenen eine optische Abbildung bewirkt.

Eine solche Vorrichtung stellt ein Hybridsystem dar, das in einer ersten Richtung oder Dimension eine herkömmliche optische Abbildung mit Hilfe einer abbildenden Optik bewirkt, während in einer zweiten, dazu senkrechten Richtung bzw. Dimension die Vorteile einer Abbildung mit synthetischer Apertur zur Verfügung stehen.

Das Prinzip der Bildgebung mit synthetischer Apertur, welche häufig auch als synthetische Bildgebung bezeichnet wird, besteht darin, die Momentaufnahme einer Antenne mit großer Apertur durch eine Mehrzahl von zeitlich aufeinanderfolgenden Aufnahme einer bewegten Antenne oder eines bewegten Objektivs mit kleiner Apertur oder auch durch eine Mehrzahl von zeitlich aufeinanderfolgenden Aufnahmen einer Mehrzahl ortsfester Antennen mit kleiner Apertur zu ersetzen.

In einer Ausführungsform eines solchen Hybridsystems weist die erfindungsgemäße Vorrichtung eine Quelle mit mindestens einem ersten und einem zweiten emittierenden Element für elektromagnetische Hochfrequenzstrahlung auf, die zusammen mit den Empfängern des Detektors so angeordnet sind, daß sie eine Zeile mit emittierenden Elementen und Empfängern bilden. Dabei erfolgt die Beleuchtung des Objekts mit der von den emittierenden Elementen abgestrahlten Strahlung in einer Ausführungsform mit der gleichen abbildenden Einrichtung, insbesondere der gleichen abbildenden Optik, welche dazu dient, die Strahlung auf die Empfänger abzubilden.

Dabei ist das erfindungsgemäße Hybridsystem nicht auf zwei emittierende Elemente oder Empfänger beschränkt, sondern weist in Ausführungsformen mehr als zwei emittierende Elemente und/oder Empfänger auf.

Unter einer Zeile im Sinne der vorliegenden Anmeldung wird eine Anordnung der emittierenden Elemente und/oder Empfänger verstanden, bei der die emittierenden Elemente und/oder Empfänger entlang einer Geraden angeordnet sind. Dies bedeutet, daß die Anordnung aus emittierenden Elementen und/oder Empfängern in einer Richtung eine größere Erstreckung aufweist als in der dazu senkrechten Richtung. Eine Zeile im Sinne der vorliegenden Erfindung schließt jedoch nicht aus, daß jede Spalte der Zeile mehr als ein emittierendes Element bzw. einen Empfänger aufweist. Das heißt auch, daß beispielsweise Anordnungen von 2 x 4 oder 4 x 20 emittierenden Elementen bzw. Empfängern als Zeile betrachtet werden, solange die Anordnung in einer Richtung eine größere Ausdehnung aufweist als in der dazu senkrechten Richtung.

Wenn in der Beschreibung der vorliegenden Erfindung davon die Rede ist, daß die abbildende Optik so eingerichtet ist, daß sie nur in der zu der Zeile im wesentlichen senkrechten Ebene eine optische Abbildung bewirkt, so bedeutet dies, daß beispielsweise parallel auf die abbildende Optik auftreffende Strahlen nur in der zu der Zeile senkrechten Ebene so abgelenkt werden, daß sie hinter der abbildenden Optik auf eine Linie fokussiert werden.

In einer Ausführungsform der Erfindung weist die abbildende Optik eine zylindrische Optik auf. Solche Zylinderoptiken sind im idealen Sinne astigmatisch, d.h. sie erzeugen nur in Ebenen senkrecht zu ihrer Zylinderachse optische Abbildungen. Solche zylindrischen Optiken sind daher zur Verwendung in Vorrichtungen gemäß der vorliegenden Erfindung besonders geeignet, da sie wenn ihre Zylinderachsen im wesentlichen parallel zu der Zeile aus emittierenden Elementen und/oder Empfängern verläuft, eine optische Abbildung in zu der Zeile senkrechten Ebenen bewirken, während sie in einer Richtung parallel zu ihrer Zylinderachse keine abbildende Wirkung haben.

Unter zylindrischen Optiken im Sinne der vorliegenden Erfindung werden Optiken verstanden, deren brechende Grenzflächen oder reflektierenden Oberflächen von der Mantelfläche eines Zylinders oder der Innenfläche eines Hohlzylinders bzw. eines Flächensegments daraus gebildet werden. Bei den Grundkörpern für diese zylindrischen Optiken handelt es sich vorzugsweise um gerade Zylinder, deren Mantel- bzw. Innenflächen senkrecht auf den Grundflächen stehen, wobei die Grundflächen oder Innenquerschnittsflächen vorzugsweise von Kreisen oder Ellipsen gebildet werden. Auch Optiken mit parabefförmigen oder hyperbelförmigen Oberflächen zählen im Sinne der vorliegenden Erfindung zu den zylindrischen Optiken, solange sie Astigmaten sind.

In einer Ausführungsform ist die Zeile aus emittierenden Elementen und/oder Empfängern in einem ersten Brennpunkt einer hohlzylindrischen Optik angeordnet. Weist in einer Ausführungsform der Erfindung die hohlzylindrische Optik eine elliptische Innenquerschnittsfläche auf, die den Verlauf der reflektierenden Innenfläche des Körpers definiert, so hat die Zylinderoptik zwei Brennpunkte.

Wird die zylindrische Zeile aus emittierenden Elementen und/oder Empfängern in dem ersten Brennpunkt angeordnet, so daß die emittierenden Elemente und/oder Empfänger zu der reflektierenden Oberfläche der hohlzylindrischen Optik hinzeigen, so wird die von den Strahlungsquellen abgestrahlte elektromagnetische Strahlung von dem elliptischen Spiegel auf eine (Brenn-)Linie auf dem Objekt fokussiert. Während die Auflösung dieser abbildenden Vorrichtung in der Richtung senkrecht zur Anordnung der Zeile durch die Abbildung selbst erzielt wird, wird in einer Richtung parallel zu der Zeile eine synthetische Apertur errechnet, die in dieser Richtung der Bilderzeugung dient. Alternativ zu den beschriebenen elliptischen oder parabolischen Hohlspiegeln können die abbildenden Optiken in Ausführungsformen der Erfindung auch durch zylindrische Teleskope, beispielsweise zylindrische Cassegrain-Teleskope, Newton-Teleskope, Schmidt-Teleskope oder Mischformen davon gebildet werden.

Um in einer Richtung senkrecht zu der Zeile ein Bild erzeugen zu können, ist in einer Ausführungsform der Erfindung die zylindrische Optik um eine zu der Zylinderachse, d.h. auch zu der Zeile aus emittierenden Elementen und/oder Empfängern, parallele Achse verschwenkbar. Auf diese Weise kann ein Objekt in einer Richtung senkrecht zu der Zeile abgetastet bzw. gerastert werden. Die zylindrische Optik stellt dann gleichzeitig das steuerbare, die Strahlrichtung ändernde Element im Sinne der vorliegenden Erfindung dar.

In einer weiteren Ausführungsform der Erfindung ist das erste emittierende Element für elektromagnetische Hochfrequenzstrahlung für das Abstrahlen eines ersten eindeutig identifizierbaren elektromagnetischen Signals eingerichtet, und das zweite emittierende Element für elektromagnetische Hochfrequenzstrahlung ist für das Abstrahlen eines zweiten eindeutig identifizierbaren elektromagnetischen Signals eingerichtet, und die zwei Empfänger sind so eingerichtet, daß jeder von ihnen im wesentlichen gleichzeitig und unterscheidbar das erste und das zweite Signal empfängt.

In einer Ausführungsform der Erfindung sind die von den einzelnen emittierenden Elementen abgestrahlten elektromagnetischen Signale mit Hilfe der Frequenz der abgestrahlten Signale eindeutig kodiert, d.h. sie sind durch ihre Frequenz voneinander zu unterscheiden. Da es in einer Ausführungsform keine zwei emittierenden Elemente mit identischer Frequenz des jeweils abgestrahlten elektromagnetischen Signals gibt, kann jedes von einem Empfänger empfangene Signal eindeutig einem einzigen emittierenden Element zugeordnet werden.

Da jeder der Empfänger gleichzeitig das erste Signal und das zweite Signal empfängt, kann aus den empfangenen Signalen in kurzer Zeit eine große Apertur in Richtung der Zeile aus emittierenden Elementen und/oder Empfängern synthetisiert und ein zeilenförmiges Bild mit hoher Auflösung berechnet werden.

Im Sinne dieser Ausführungsform wird unter der Frequenz der elektromagnetischen Signale deren Trägerfrequenz und nicht etwa deren Modulationsfrequenz verstanden.

Alternativ zu der beschriebenen Frequenzkodierung kann eine eindeutige Identifizierbarkeit der von den einzelnen emittierenden Elementen abgestrahlten elektromagnetischen Signale auch durch eine eindeutige Kanalkodierung bei gleicher Trägerfrequenz erfolgen, so wie sie aus der Mobilfunk- und Kommunikationstechnik bekannt ist.

In einer weiteren Ausführungsform der Erfindung sind der erste und der zweite Empfänger phasenstarr miteinander gekoppelt, unabhängig davon, ob die Strahlungsquellen und die Empfänger phasenstarr gekoppelt sind oder nicht. Auf diese Weise kann die Erfassung der elektromagnetischen Signale interferometrisch erfolgen, wobei zur Bilderzeugung interferometrische Algorithmen verwendet werden, welche die Phasendifferenzen der elektromagnetischen Signale zwischen den einzelnen Empfängern berücksichtigen.

Darüber hinaus sind in einer Ausführungsform der erste und der zweite Empfänger mit den Strahlungsquellen phasengekoppelt.

Die erfindungsgemäße Vorrichtung eignet sich dabei insbesondere für die Abstrahlung und den Empfang eines elektromagnetischen Dauerstrichsignals (CW-Signal). In einer Ausführungsform kann die Frequenz der abgestrahlten elektromagnetischen Dauerstrichsignale über die Meßzeit hinweg konstant gehalten werden. Alternativ kann die Frequenz der Signale über die Meßzeit hinweg verändert werden, unter der Voraussetzung, daß zu keinem Zeitpunkt zwei Signale die gleiche Frequenz oder die gleiche eindeutig identifizierbare Signatur aufweisen, um über die gesamte Meßzeit hinweg eine eindeutige Zuordnung der einzelnen von den Empfängern empfangenen Signale zu den jeweiligen emittierenden Elementen zu ermöglichen.

In einer Ausführungsform erfolgt auch das Abstrahlen des ersten und des zweiten Signals im wesentlichen gleichzeitig. Aufgrund der eindeutigen Identifizierbarkeit der von den einzelnen emittierenden Elementen abgestrahlten elektromagnetischen Signale können trotz gleichzeitiger Abstrahlung der Signale diese eindeutig den emittierenden Elementen zugeordnet werden.

Die Berechnung des zeilenförmigen Bildes in der Richtung der zeilenförmigen Anordnung aus emittierenden Elementen und/oder Empfängern erfolgt mit Hilfe von Algorithmen, so wie sie für Bildgebungsverfahren mit synthetischer Apertur sowie zur interferometrischen Radarbildgebung oder interferometrischen Radioastronomie typischerweise verwendet werden. Dabei werden in einer Ausführungsform die Prinzipien der synthetischen Bildgebung verwendet, um die gleichzeitig von mindestens zwei Empfängern empfangenen Signale eines einzigen emittierenden Elements zu einem ersten synthetischen Bild einer einzigen virtuellen Antenne mit einer großen synthetischen Apertur zu verarbeiten. Diese Erzeugung eines synthetischen Bildes erfolgt dabei dann gleichzeitig auch für alle weiteren Signale, die von den anderen emittierenden Elementen abgestrahlt werden. Entsprechende Bildgebungsalgorithmen sind beispielsweise aus dem Buch von Mehrdad Soumekh "Fourier Array Imaging", Prentice Hall, PTR, Auflage: Januar 1994, ISBN-10:0130637696 bekannt. Die hierin als Bildgebung mit synthetischer Apertur beschriebenen Verfahren zur Erzeugung eines Bildes des Objekts werden an anderer Stelle in der Literatur auch als holgraphische Bildgebung oder Interferenzbildgebung bezeichnet.

Eine Ausführungsform, die wie oben beschrieben eine erstes und ein zweites emittierendes Element aufweist, wobei das erste emittierende Element für das Abstrahlen eines ersten elektromagnetischen Signals mit einer ersten Frequenz eingerichtet ist und wobei das zweite emittierende Element für das Abstrahlen eines zweiten elektromagnetischen Signals mit einer zweiten Frequenz eingerichtet ist, wobei die erste und die zweite Frequenz voneinander verschieden sind und mit mindestens zwei Empfängern, die so eingerichtet sind, daß jeder von ihnen im wesentlichen gleichzeitig das erste und das zweite Signal empfängt, ist in der deutschen Patentanmeldung DE 10 2007 045 103.4 beschrieben. Insbesondere kann die Anordnung aus den mindestens einen ersten und zweiten emittierenden Elementen sowie der mindestens zwei Empfänger der Beschreibung der genannten Offenlegungsschrift, insbesondere aber den Patentansprüchen, entnommen werden.

Zumindest eine der zuvor genannten Aufgaben wird auch durch ein Verfahren nach Anspruch 9 gelöst.

In einer Ausführungsform weist das erfindungsgemäße Verfahren darüber hinaus die Schritte auf: Abbilden des Objekts mit einer Mehrzahl von voneinander räumlich getrennten Strahlengängen, deren Foki an einer Mehrzahl voneinander verschiedener Orte liegen und Steuern des die Strahlrichtung ändernden Elements, so daß die Foki der voneinander getrennten Strahlengänge räumlich bewegt werden.

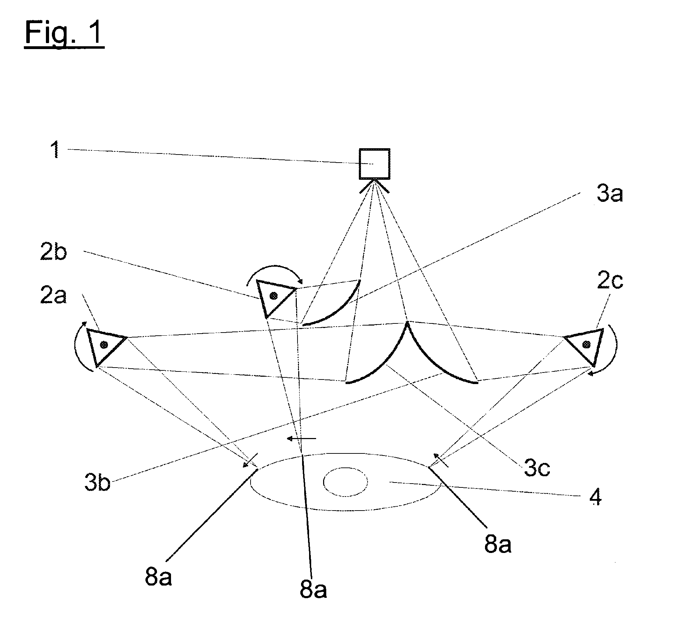

Weitere Vorteile, Merkmale und Anwendungsmöglichkeiten der vorliegenden Erfindung werden anhand der folgenden Beschreibung von Ausführungsformen und der dazugehörigen Figuren deutlich.
- Figur 1: zeigt eine Ausführungsform einer beispielhaften Vorrichtung zum Abbilden eines Objekts.
- Figur 2: zeigt eine Ausführungsform der erfindungsgemäßen Vorrichtung zum Abbilden eines Objekts.
Bei der in Figur 1 gezeigten Ausführungsform handelt es sich um ein sogenanntes aktives System, d.h. das System weist eine Beleuchtung auf, die das zu erfassende Objekt mit Hochfrequenzstrahlung beleuchtet, die dann von einem Detektor, der in dem gleichen Gehäuse 1 wie die Quelle angeordnet ist, erfaßt wird.

Die Anordnung 1 aus Quelle und Detektor weist eine Mehrzahl von emittierenden Elementen und Empfängern auf, wobei die emittierenden Elemente die Quelle bilden und die Empfänger den Detektor bilden. Die zeilenförmige Anordnung weist nebeneinander in unregelmäßiger Abfolge angeordnete emittierende Elemente und Empfänger auf. In der dargestellten Ausführungsform weist die Zeile je fünf emittierende Elemente und Empfänger auf. Auf diese Weise ergibt sich eine Vielzahl von Abständen zwischen den Abstrahlungs- und Empfangspositionen der einzelnen emittierenden Elemente und Empfänger. So wird schon mit einer geringen Anzahl von emittierenden Elementen und Empfängern in einer Dimension, d.h. in einer Richtung nebeneinander, eine gute Abdeckung im k-Raum erreicht, wobei k der inverse Wellenvektor ist.

Das zeilenförmige Array aus emittierenden Elementen und Empfängern ist in der dargestellten Ausführungsform in den ersten Brennlinien bzw. Foki dreier elliptischer Hohlzylinderspiegel 3a, 3b, 3c angeordnet. In der schematischen Draufsicht aus Figur 1 auf die abbildende Vorrichtung ist der Verlauf der Zeile aus emittierenden Elementen und Empfängern senkrecht zur Ebene des Blatts. In dieser Richtung, d.h. in der zu der Zeile parallelen Richtung, sind die Spiegel 3a - 3c nicht gekrümmt, so daß wie bei einer Zylinderlinse nur eine astigmatische Abbildung in Ebenen senkrecht zu der Zeile, d.h. in Ebenen parallel zur Ebene des Papiers der Ansicht aus Figur 1, bewirkt wird.

In einer dazu alternativen, hier nicht dargestellten Ausführungsform können die hohlzylindrischen Spiegel 3a - 3c durch entsprechende Zylinderlinsen ersetzt werden, wobei das Objekt von der Quellen-Detektor-Anordnung 1 aus betrachtet hinter der Linse anzuordnen wäre.

Die fokussierenden Spiegel 3a - 3c sind so im Emissionskeil der Quelle-Detektor-Anordnung 1 angeordnet, daß sie jeweils etwa ein Drittel der Gesamtleistung der Quelle auf drei voneinander räumlich getrennte Strahlengänge aufteilen. Die fokussierenden Spiegel 3a - 3c erzeugen neben einem ersten Brennpunkt, welcher auf der Zeile aus emittierenden Elementen und Empfängern in der Quellen-Detektor-Anordnung 1 liegt jeweils einen zweiten Fokus bzw. Brennlinie 8a - 8c, der so angeordnet ist, daß er auf dem abzubildenden Objekt 4 zu liegen kommt.

Die drei räumlich voneinander getrennten Strahlengänge betrachten das Objekt 4 jeweils aus anderen Blickrichtungen.

In der dargestellten Ausführungsform sind die drei getrennten Strahlpfade so gewählt, daß sie jeweils voneinander verschiedene optische Weglängen aufweisen. Dadurch werden die drei vom Objekt reflektierten Signalanteile durch ihre Laufzeitverzögerung, d.h. ihr zeitlich getrenntes Eintreffen auf den Empfängern der Quellen-Detektor-Anordnung, unterscheidbar.

Alle drei Ausschnitte des Objekts können daher mit den gleichen Empfängern in der Quellen-Detektor-Anordnung erfaßt werden, ohne daß es zu einer Vermischung der Information der einzelnen Ausschnitte kommt.

In jedem der drei Strahlengänge ist ein bewegliches Spiegelelement 2a - 2c angeordnet. Die Spiegelelemente 2a - 2c ermöglichen es, die Foki bzw. Brennlinien 8a - 8c unabhängig voneinander über das Objekt zu bewegen und dieses jeweils über einen Ausschnitt hinweg abzutasten. Im Betrieb der Vorrichtung wird für jeden Objektausschnitt, der von den Brennlinien 8a - 8c abgetastet wird, jeweils ein Bild erzeugt. Die Bereiche zwischen den Brennlinien 8a - 8c werden dann anhand unterschiedlicher Kriterien interpoliert, um so eine Abbildung des gesamten Objekts 4 zu erhalten.

Jede der Teilabbildungen der von einer Brennlinie 8a - 8c überstrichenen Oberfläche des Objekts 4 stellt dabei eine Kombination aus einer "echten" optischen Abbildung in Ebenen parallel zur Fläche des Papiers in der Ansicht aus Figur 1, d.h. einer physikalisch durch das entsprechende fokussierende Element 3a - 3c bewirkten Abbildung und einer Abbildung mit synthetischer Apertur in einer dazu senkrechten (d.h. auch zur Ebene des Papiers der Abbildung aus Figur 1 senkrechten) Richtung dar.

Die Abbildung mit synthetischer Apertur erfolgt mit Hilfe geeigneter Algorithmen, die eine Auswertung der gemessenen Signalamplituden und -phasen erlauben, d.h. eine synthetische Fokussierung parallel zur Richtung der Zeile. Falls eine Laufzeitinformation, d.h. eine Information über die Phasenlage, vorliegt, so kann auch eine Rekonstruktion der Information über den Abstand des Objekts 4 von der Quellen-Detektor-Anordnung 1 erfolgen.

Dadurch, daß mit Hilfe der zeilenförmigen Quellen-Detektor-Anordnung 1 aus emittierenden Elementen und Empfängern nur in einer Dimension eine synthetische Abbildung erfolgt, sind die Anforderungen sowohl an die Anzahl der emittierenden Elemente und Empfänger als auch an die Rechenleistung zur Rekonstruktion der abgebildeten Objektoberflächen des Objekts 4 in der Objektebene gegenüber vollsynthetischen Systemen deutlich reduziert. Darüber hinaus ist das Signal-zu-Rausch-Verhältnis der Anordnung im Vergleich zu einem vollsynthetischen System, das eine synthetische Apertur in zwei Raumrichtungen berechnet, deutlich verbessert, da durch die Abbildung mit den Hohlspiegeln 3a - 3c ein deutlicher Gewinn an Signal zumindest in einer Dimension erzielt wird.

Verglichen mit einem rein optischen, d.h. in zwei Dimensionen abbildenden System weisen die zur Abbildung der jeweiligen Objektausschnitte verwendeten Spiegel 3a - 3c eine deutlich größere numerische Apertur und damit verbunden eine größere Auflösung auf. Dabei fallen aufgrund der geringen räumlichen Größe der Spiegel 3a - 3c die Bildfehler deutlich geringer aus als bei einer Abbildung des gesamten Objekts mit Hilfe einer einzigen Optik, die eine mit den Spiegeln 3a - 3c vergleichbare numerische Apertur aufweist und die dazu verwendet wird, das gesamte Objekt 5 abzutasten.

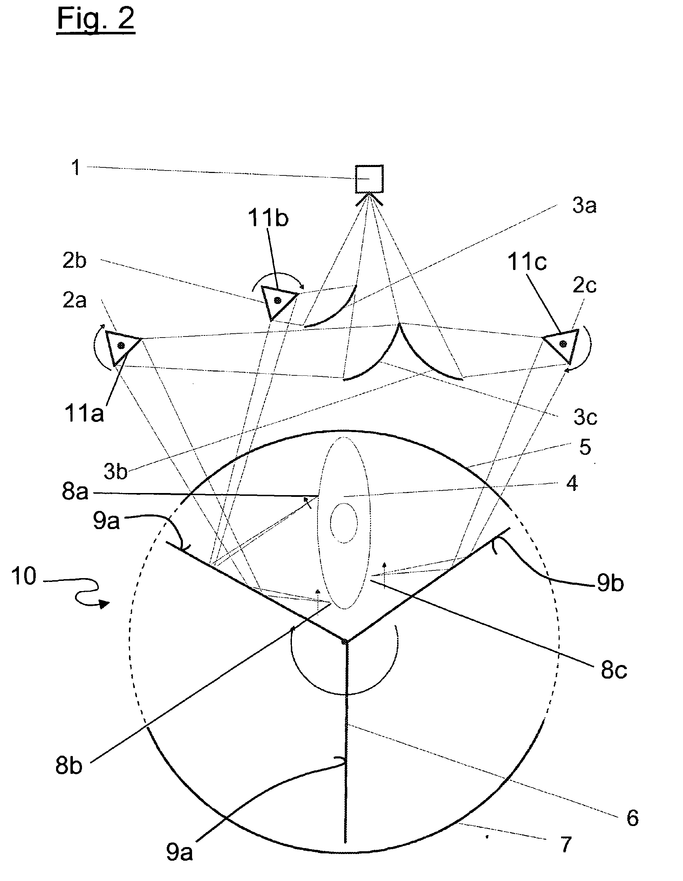

Während bei einem System mit einem Aufbau, so wie er in Figur 1 dargestellt ist, relativ große Bereiche des Objekts 4 zwischen den von den Brennlinien 8a - 8c überstrichenen Bereichen der Oberfläche des Objekts interpoliert werden müssen, ermöglicht es die erfindungsgemäße, in Figur 2 dargestellte Ausführungsform größere Bereiche des zu erfassenden Objekts zu überstreichen. Dabei sind in Figur 2 die mit der Anordnung aus Figur 1 identischen Elemente mit gleichen Bezugszeichen bezeichnet.

Zusätzlich zu den sich schnell drehenden Spiegelanordnungen 2a - 2c aus Figur 1 in jedem der drei Strahlengänge ist in den drei Strahlengängen aus Figur 2 noch ein weiteres gemeinsames reflektierendes bewegbares Element, nämlich der Flügel 6 einer Drehtür 10 vorgesehen.

Eine solche Anordnung kann beispielsweise zum Erfassen einer Person beim Betreten eines Gebäudes durch eine solche Drehtür verwendet werden. Während ein schnelles Überstreichen der Brennlinien 8a - 8c über das Objekt 4 durch die sich schnell drehenden spiegelnden Elemente 2a - 2c erfolgt, wird der von den Brennlinien 8a - 8c überstrichene Bereich fortlaufend durch die Drehtür 10 geändert. Die spiegelnden Oberflächen 9a - 9c der Flügel 6 der Drehtür 10, welche sich mit einer verglichen mit den spiegelnden Elementen 2a - 2c geringeren Drehgeschwindigkeit drehen, verändern fortlaufend die Blickrichtungen der einzelnen Strahlengänge. Auf diese Weise lassen sich die zu interpolierenden Bereiche der Oberfläche des Objekts 4 zwischen den von den Brennlinien 8a bis 8c überstrichenen Bereichen verringern.

Die in den Figuren 1 und 2 dargestellten spiegelnden Elemente 2a - 2c bestehen aus zylindrischen Körpern mit dreieckigen Grundflächen, so daß sie drei Seitenflächen aufweisen. Die Spiegelkörper 2a - 2c werden um Drehachsen gedreht, so daß die spiegelnden Flächen durch den jeweiligen Strahlengang gedreht werden. Durch die reine Drehbewegung der Elemente 2a - 2c läßt sich eine hohe Abtastrate für jeden von den Brennlinien 8a - 8c überstrichenen Bereich erzielen. In der dargestellten Ausführungsform ist jeweils nur eine Seitenfläche 11 a - 11 c jedes dreieckigen Spiegelkörpers 2a - 2c für die verwendete Hochfrequenzstrahlung verspiegelt, während die beiden anderen Seitenflächen für die Hochfrequenzstrahlung absorbierend sind. Auf diese Weise kann sichergestellt werden, daß jeweils nur ein Strahlpfad (anders als in den Figuren 1 und 2 zeichnerisch zur Veranschaulichung dargestellt) aktiv, d.h. transparent für die elektromagnetische Strahlung ist. So kann eine zusätzliche Unterscheidung zwischen den Signalen der drei unterschiedlichen Objektausschnitte getroffen werden.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, daß bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Patentansprüche

1. Vorrichtung zur Durchführung des Verfahrens nach Anspruch 9 zum Abbilden eines Objekts (4) mit Hilfe elektromagnetischer Hochfrequenzstrahlung,
mit mindestens einem Detektor (1) für die elektromagnetische Hochfrequenzstrahlung,
mit mindestens einer abbildenden Einrichtung (3a, 3b, 3c), die einen Fokus erzeugt und mit mindestens einem steuerbaren, die Strahlrichtungtung der elektromagnetischen Hochfrequenzstrahlung ändernden Element (9a, 9b, 9c), das so eingerichtet ist, daß der Fokus der abbildenden Einrichtung bewegbar ist,
**dadurch gekennzeichnet, daß** das steuerbare, die Strahlrichtung ändernde Element eine für die zu erfassende elektromagnetische Hochfrequenzstrahlung spiegelnde Fläche (9a, 9b, 9c) eines Flügels (6) einer Drehtür (10) ist.

2. Vorrichtung nach Anspruch 1, **dadurch gekennzeichnet, daß** die abbildende Einrichtung (3a, 3b, 3c) so eingerichtet ist, daß sie eine Mehrzahl von voneinander räumlich getrennten Strahlengängen bildet, deren Foki an einer Mehrzahl voneinander verschiedener Orte liegen und wobei das steuerbare, die Strahlrichtung ändernde Element (9a, 9b, 9c) so eingerichtet ist, daß die Foki der voneinander getrennten Strahlengänge räumlich bewegbar sind.

3. Vorrichtung nach Anspruch 1 oder 2 mit mindestens einem weiteren steuerbaren, die Strahlrichtung ändernden Element (11a, 11b, 11c), **dadurch gekennzeichnet, daß** das weitere steuerbare, die Strahlrichtung ändernde Element (11a, 11a, 11c) ein bewegbares optisches Element, vorzugsweise ein drehbarer oder verschwenkbarer Spiegel, ist.

4. Vorrichtung nach Anspruch 3, **dadurch gekennzeichnet, daß** das bewegbare optische Element (11a, 11a, 11c) ein Körper mit polygonaler, vorzugsweise dreieckiger Grundfläche ist, dessen zumindest eine Seitenfläche einen Spiegel für die verwendete Strahlung bildet und der um eine Achse drehbar ist.

5. Vorrichtung nach Anspruch 4, **dadurch gekennzeichnet, daß** zumindest eine der Seitenflächen des Körpers mit polygonaler Grundfläche ein für die verwendete Hochfrequenzstrahlung absorbierendes Material aufweist.

6. Vorrichtung nach einem der Ansprüche 3 bis 5, **dadurch gekennzeichnet, daß** zur Bildung eines jeden der räumlich getrennten Strahlengänge mindestens ein bewegbares optisches Element (11a, 11a, 11c) eingesetzt wird.

7. Vorrichtung nach einem der Ansprüche 2 bis 6, **dadurch gekennzeichnet, daß** jeder der räumlich getrennten Strahlengänge eine optische Weglänge zwischen Detektor (1) und Fokus aufweist, wobei die optischen Weglängen alle voneinander verschieden sind.

8. Vorrichtung nach einem der Ansprüche 2 bis 7, **dadurch gekennzeichnet; daß** jeder der räumlich getrennten Strahlengänge jeweils mindestens ein fokussierendes Element (3a, 3b, 3c) aufweist.

9. Verfahren zum Abbilden eines Objekts mit Hilfe elektromagnetischer Hochfrequenzstrahlung mit den Schritten:
Abbilden des Objekts (4) auf mindestens einen Detektor (1) mit einer abbildenden Einrichtung (3a, 3b, 3c), die einen Fokus erzeugt,
Erfassen der Abbildung mit dem Detektor (1) und
Steuern eines die Strahlrichtung ändernden Elements (9a, 9b, 9c), so daß der Fokus der abbildenden Einrichtung räumlich über das Objekt (4) bewegt wird,
**dadurch gekennzeichnet, daß** das gesteuerte, die Strahlrichtung ändernde Element eine für die zu erfassende elektromagnetische Hochfrequenzstrahlung spiegelnde Fläche (9a, 9b, 9c) eines Flügels (6) einer Drehtür (10) ist.

10. Verfahren nach Anspruch 9, darüber hinaus mit den Schritten Abbilden des Objekts mit einer Mehrzahl von voneinander räumlich getrennten Strahlengängen, deren Foki an einer Mehrzahl voneinander verschiedener Orte liegen, und Steuern des die Strahlrichtung ändernden Elements (9a, 9b, 9c) so, daß eine Mehrzahl von Foki der voneinander getrennten Strahlengänge räumlich über das Objekt (4) bewegt wird.

## Claims

1. A device for conducting the method according to claim 9 for imaging an object (4) by means of electromagnetic high frequency radiation comprising
at least one detector (1) for the electromagnetic high frequency radiation and
with at least one imaging device (3a, 3b, 3c) for generating a focus, and with at least one controllable element (9a, 9b, 9c) for changing the beam direction of the electromagnetic high frequency radiation, which is so adapted that the focus of the imaging device is movable,
charactarised in that the controllable element changing the beam direction is a surface of a door member of a revolving door, which is reflecting for the electromagnetic high frequency radiation to be detected.

2. A device according to claim 1 **characterised in that** the imaging device (3a, 3b, 3c) is so adapted that it forms a plurality of mutually spatially separate beam paths, the foci of which are at a plurality of mutually different locations, and wherein the controllable element (9a, 9b, 9c) changing the beam direction is so adapted that the foci of the mutually separate beam paths are spatially movable.

3. A device according to claim 1 or claim 2 with at least one further controllable element (11a, 11b, 11c) changing the beam direction **characterised in that** further controllable element (11a, 11b, 11c) changing the beam direction is a movable optical element, preferably a rotatable or pivotable mirror.

4. A device according to claim 3 **characterised in that** the movable optical element (11a, 11b, 11c) is a body having a polygonal, preferably triangular base surface, of which at least one side surface forms a mirror for the radiation used and which is rotatable about an axis.

5. A device according to claim 4 **characterised in that** at least one of the side surfaces of the body having a polygonal base surface has a material absorbent for the high frequency radiation used.

6. A device according to one of claims 3 to 5 **characterised in that** for forming each of the spatially separated beam pathes at least one moveable optical element (11a, 11b, 11c) is used.

7. A device according to one of claims 2 to 6 **characterised in that** each of the spatially separate beam paths has an optical travel length between the detector (1) and the focus, wherein the optical travel lengths are all different from each other.

8. A device according to one of claims 2 to 7 **characterised in that** each of the spatially separate beam paths has at least one focusing element (3a, 3b, 3c).

9. A method of imaging an object by means of electromagnetic high frequency radiation comprising the steps:
imaging the object (4) onto at least one detector (1) with an imaging device (3a, 3b, 3c) which generates a focus,
detecting the imaging with the detector (1) and
controlling an element (9a, 9b, 9c) which changes the beam direction so that the focus of the imaging device is moved spatially over the object (4)
charactarised in that, the controllable element changing the beam direction is a surface (9a, 9b, 9c) of a door member (6) of a revolving door (10), which is reflecting for the electromagnetic high frequency radiation to be detected.

10. A method according to claim 9 and further including the steps:
imaging the object with a plurality of mutually spatially separate beam paths, the foci of which are at a plurality of mutually different locations, and
controlling the element (9a, 9b, 9c) changing the beam direction in such a way that a plurality of foci of the mutually separate beam paths are spatially moved over the object (4).

## Revendications

1. Dispositif de réalisation du procédé selon la revendication 9 destiné à l'imagerie d'un objet (4) par rayonnement électromagnétique haute fréquence, comportant
au moins un détecteur (1) de rayonnement électromagnétique haute fréquence,
au moins un dispositif (3a,3b,3c) d'imagerie qui produit un point focal et
au moins un élément (9a,9b,9c) commandé, modifiant l'orientation du faisceau du rayonnement électromagnétique haute fréquence, qui est conçu de sorte que le point focal du dispositif d'imagerie soit mobile,
**caractérisé en ce que** l'élément commandé, modifiant l'orientation du faisceau est une surface (9a,9b,9c) réfléchissant le rayonnement électromagnétique haute fréquence à capter d'un vantail (6) d'une porte tournante (10).

2. Dispositif selon la revendication 1, **caractérisé en ce que** le dispositif d'imagerie (3a,3b,3c) est conçu de sorte à former une majorité de chemins optiques séparés spatialement les uns des autres, dont les points focaux se situent à une majorité d'endroits différents les uns des autres, et l'élément (9a,9b,9c) commandé, modifiant l'orientation du faisceau étant conçu de sorte que les points focaux des chemins optiques séparés les uns des autres sont mobiles dans l'espace.

3. Dispositif selon la revendication 1 ou la revendication 2 comportant au moins un autre élément (11a, 11b, 11c) commandé, modifiant l'orientation du faisceau, **caractérisé en ce que** l'autre élément (11a, 11b, 11c) commandé, modifiant l'orientation du faisceau est un élément optique mobile, de préférence un miroir tournant ou pivotant.

4. Dispositif selon la revendication 3, **caractérisé en ce que** l'élément optique mobile (11a,11b,11c) est un corps qui a une surface de base polygonale, de préférence triangulaire, dont au moins une face latérale forme un miroir pour le rayonnement utilisé et qui peut tourner autour d'un axe.

5. Dispositif selon la revendication 4, **caractérisé en ce qu'**au moins une des faces latérales du corps ayant une surface de base polygonale présente un matériau absorbant pour le rayonnement haute fréquence utilisé.

6. Dispositif selon l'une des revendications 3 à 5, **caractérisé en ce qu'**au moins un élément optique mobile (11a,11b,11c) est utilisé pour former chacun des chemins optiques séparés spatialement.

7. Dispositif selon l'une des revendications 2 à 6, **caractérisé en ce que** chacun des chemins optiques séparés spatialement présente une longueur de chemin optique entre le détecteur (1) et le point focal, les longueurs de chemin optique étant toutes différentes les unes des autres.

8. Dispositif selon l'une des revendications 2 à 7, **caractérisé en ce que** chacun des chemins optiques séparés spatialement présente respectivement au moins un élément focalisateur (3a,3b,3c).

9. Procédé d'imagerie d'un objet par rayonnement électromagnétique haute fréquence comportant les étapes suivantes :
représenter l'objet (4) sur au moins un détecteur (1) par un dispositif (3a,3b,3c) d'imagerie, qui produit un point focal,
capturer la représentation avec le détecteur **(1)** et
commander un élément (9a,9b,9c) modifiant l'orientation du faisceau de sorte que le point focal du dispositif d'imagerie est spatialement mobile au-dessus de l'objet (4),
**caractérisé en ce que** l'élément commandé, modifiant l'orientation du faisceau est une surface (9a,9b,9c) réfléchissant le rayonnement électromagnétique haute fréquence à capter d'un vantail (6) d'une porte tournante (10).

10. Procédé selon la revendication 9, comprenant en outre les étapes :
représenter l'objet avec une majorité de chemins optiques séparés spatialement les uns des autres, dont les points focaux se situent à une majorité d'endroits différents les uns des autres, et l'élément (9a,9b,9c) commandé, et
commander l'élément (9a,9b,9C) modifiant l'orientation du faisceau de sorte qu'une majorité des points focaux des chemins optiques séparés les uns des autres est déplacée spatialement au-dessus de l'objet (4).
